# EUROPÄISCHE PATENTANMELDUNG

(11) **EP 1 072 354 A2**
(43) Veröffentlichungstag der Anmeldung: **31.01.2001**
(21) Anmeldenummer: 00114807.1
(22) Anmeldetag: 11.07.2000
(51) Int. Cl.: B23P 15/00, F01D 5/28

(54) **Turbinenschaufel und Verfahren zu deren Herstellung**

(30) Priorität: 24.07.1999 DE 19934856
(71) Anmelder: ABB Research Ltd., 8050 Zürich (CH)
(72) Erfinder: Bossmann, Hans-Peter, Dr., 69168 Wiesloch (DE); Bernhardi, Otto-Ernst, Dr., 76669 Bad Schönborn (DE); Schmutzler, Hans-Joachim, Dr., 67487 Maikammer (DE); Reiss, Harold, Prof. Dr., 69118 Heidelberg (DE); Milanovic, Raiko, 69121 Heidelberg (DE); Weiler, Ludwig, Dr., 69124 Heidelberg (DE); Sommer, Christoph, Dr., 68723 Plankstadt (DE); Sommer, Marianne, Dr., 69207 Sandhausen (DE)
(74) Vertreter: Miller, Toivo

(57) **Zusammenfassung**

Die Erfindung bezieht sich auf eine Turbinenschaufel (1) und ein Verfahren zu deren Herstellung. Um die Turbinenschaufel (1) vor einer Beschädigung durch die im Gas (10) mitgeführten Teilchen (11) zu schützen, werden die Oberflächen (1S) der Turbinenschaufel (1) zur Ausbildung eines definierten amorphen Bereichs (2) auf der kristallinen Struktur des Basismaterials bis zu einer vorgegebenen Tiefe aufgeschmolzen und anschließend mit einer pro Zeiteinheit vorgegebenen Temperaturabsenkung abgekühlt.

## Beschreibung

Die Erfindung bezieht sich auf ein Verfahren zur Herstellung einer Turbinenschaufel gemäß dem Oberbegriff des Patentanspruchs 1, so wie auf eine nach diesem Verfahren hergestellte Turbinenschaufel gemäß Patentanspruch 9.

Turbinenschaufeln werden zum Antrieb von Gasturbinen direkt mit heißen Verbrennungsgasen beaufschlagt. Sie sind dabei sowohl thermischen als auch mechanischen Beanspruchungen während des Betriebs der Gasturbine ausgesetzt. Von den heißen Gasen mitgeführte Teilchen, die z. B. durch Abrieb von keramischen Brennkammerauskleidungen zustande kommen können, weisen beachtliche Geschwindigkeiten auf, so daß sie in der Lage sind, durch Einschlag auf die Schaufeloberfläche Material von den Oberflächen der Turbinenschaufeln abzutragen. Unter sehr schlechten Bedingungen kann der Verlust an Material so groß sein, daß Turbinenschaufeln schon nach einigen Monaten nicht mehr voll funktionsfähig sind.

Der Erfindung liegt deshalb die Aufgabe zugrunde, ein Verfahren zur Herstellung einer Turbinenschaufel aufzuzeigen, deren Oberflächen gegen das Abtragen von Material optimal geschützt sind. Ferner liegt der Erfindung die Aufgabe zugrunde, eine nach dem Verfahren hergestellte Turbinenschaufel aufzuzeigen.

Der erste Teil der Aufgabe wird durch die Merkmale des Patentanspruchs 1 gelöst.

Der zweite Teil der Aufgabe wird durch die Merkmale des Patentanspruchs 9 gelöst.

Die erfindungsgemäße Turbinenschaufel wird zunächst in an sich bekannter Weise aus einer Nicketbasislegierung gefertigt. Dann werden ihre Oberflächen mit dem Strahl z. B. eines CO₂-Lasers bis zu einer Tiefe von 0.001 bis 3mm aufgeschmolzen. Anschließend wird das verflüssigte Material durch Abschalten der Strahlungsquelle oder durch zusätzliche Kühlmaßnahmen mit einer Abkühlgeschwindigkeit von 10¹⁰ bis 10¹⁵ K/s wieder abgekühlt.

Durch diese hohe Abkühlgeschwindigkeit wird die Oberfläche der Turbinenschaufel auf der dem heißen Gas zugewandten Seite mit einer amorphen Festkörperstruktur versehen. Durch eine geeignete Wahl der Abkühlgeschwindigkeit ist es zudem möglich, die amorphe Struktur mit geschlossenen Poren zu versehen. Die amorphe Struktur geht fließend und um so mehr in die ursprüngliche kristalline Struktur der Basislegierung über, je größer der Abstand von der Schaufeloberfläche ist. Der fließende Übergang stellt sicher, daß zwischen der amorphen Struktur und der ursprünglichen, durch die Laserstrahlung nicht oder nur graduell veränderten kristallinen Struktur des Nickelbasismaterials, keine diskontinuierlichen, abrupten Grenzflächen gebildet werden, die zu einem, bei herkömmlichen Schaufelbeschichtungen weithin bekannten Abplatzen von Schichten führen könnten. Die so behandelten Oberflächen erhalten durch die Lasermodifikation somit den Charakter von Gradientenschichten mit stetigen, nicht abrupten Übergängen von einer amorphen Struktur zur darunterliegenden, ursprünglichen kristallinen Struktur. Daher bedarf es auch keiner zusätzlichen, haftvermittelnden Zwischenschichten, die bei herkömmlichen Schaufelbeschichtungen benötigt werden, um die Haftung von obenaufliegenden Wärmedämmschichten zu verbessern.

Die amorphe Schicht hat zudem den Charakter einer Funktionsschicht, da die strukturelle und materielle Zusammensetzung dieser Schicht für die Vermeidung von Teilchenschlagerosion optimiert ist. Die Bestrahlungsintensität, deren Dauer, die Abkühlgeschwindigkeit und eine unten erläuterte, während des Aufschmelzens zusätzlich vorzusehende Materialzufuhr werden so gewählt, daß die amorphe Struktur nach ihrem Erstarren ein möglichst großes Verhältnis von elastischer zu plastischer Verformung aufweist. Gleichzeitig soll die beim Teilchenaufprall übertragene Energie lokal so stark absorbiert werden, daß das Abtragen von Material an der Einschlagstelle und eine Ausbreitung von Kompressionszonen und Druckwellen in das Schaufelmaterial außerhalb der Einschlagstelle unterbunden wird.

Die Bestrahlungsintensität und deren Dauer müssen so gewählt werden, daß ein Aufschmelzen der Oberfläche innerhalb von Millisekunden bis zu einer Tiefe von 0.001 bis 3 mm gewährleistet ist. Beide Parameter sind somit von der Strahlungsabsorption und der Temperaturleitfähigkeit des Schaufelmaterials im Festkörper- und dann im flüssigen Zustand abhängig. Die Festlegung dieser Parameter geschieht nach bekannten Regeln des Wärmetransports unter Beachtung von Phasenübergängen, d. h. dem in die Tiefe des Schaufelmaterials erfolgenden Fortschreiten der Front einer Schmelzzone, und einer sich anschließenden Konvektion der flüssigen Bestandteile unter dem Einfluß der Laserstrahlung. Die Abkühlgeschwindigkeit richtet sich nach dem Erstarrungsverhalten des Schaufelwerkstoffs und dem Erstarrungsverhalten zusätzlicher, während des Aufschmelzens hinzugefügter Werkstoffe (wie unten beschrieben). Bei Nickelbasiswerkstoffen liegt sie vorteilhaft im Bereich von 10¹⁰ bis 10¹⁵ K/s.

Zunächst ist die amorphe Struktur grundsätzlich für die Absorption der Einschlagenergie der Teilchen durch starke lokale Dämpfung der beim Einschlag übertragenen mechanischen Schwingungsenergie geeignet. Ein kristallines Festkörpergitter würde dagegen wegen des regelmäßigen Gitteraufbaus die Ausbreitung von Kompressionswellen begünstigen, was dazu führen kann, daß direkt unter der Einschlagstelle und auch außerhalb dessen Schädigungen durch Abplatzen von Material erfolgen können, wenn die dorthin übertragene Einschlagenergie größer ist als die Bindungsenergie der das Schaufelmaterial bildenden Festkörperbestandteile.

Diese Eigenschaft der amorphen Schicht kann optimiert werden, wenn bei ihrem Herstellungsprozeß dem aufgeschmolzenen Basismaterial weitere Werkstoffe zur Bildung von Legierungen, Cermets oder Mischkeramiken hinzugefügt werden. Das Hinzufügen dieser Werkstoffe kann in Form von Bändern, Drähten, Pulvern, Fasern oder aus der Gasphase erfolgen. Hierfür kommen alle Werkstoffe in Frage, welche ein hohes Kationen zu Anionen Gewichtsverhältnis aufweisen, wie beispielsweise Zirkoniumdioxid Bariumoxid, Titanoxid oder Yttriumoxid oder andere, hochtemperaturstabile, schlecht wärmeleitende Keramiken.

Die so ausgebildeten amorphen Oberflächen können zudem bis zu ihrer Tiefe von 0,001 bis 3 mm eine Vielzahl geschlossener Poren aufweisen. Solche Poren können helfen, die Ausbreitung von Druckwellen im Festkörpermaterial weiter zu verringern, indem sie solche Wellen durch Vielfachreflexion an den Porenstrukturen und/oder Zellstrukturen dämpfen. Solche Strukturen haben stark unterschiedliche mechanische (elastische) Konstanten, welche zu einer starken Dispersion der mechanischen Schwingungen und Druckwellen und damit zu ihrer Absorption führen. Die geschlossenen Poren unterstützen somit die Verhinderung von Teilchenschlagerosion, weil sie die Einschlagenergie bereits am oder unter dem Einschlagpunkt aufzehren. Da poröse Festkörper oder Festkörperschichten weiterhin eine kleinere Wärmeleitfähigkeit haben als homogene Festkörper oder Festkörperschichten, wird die amorphe, poröse Struktur nahe der Schaufeloberfläche auch die Funktion einer Wärmedämmschicht erfüllen.

Zu der Bildung von Poren kommt es, wenn der Dampfdruck des Basismaterials und der Dampfdruck der zusätzlichen Werkstoffe bei den während des Aufschmelzens der Schaufeloberfläche erreichten Temperaturen so hoch ist, daß er den jeweiligen Flüssigkeits- und den von der Oberflächenspannung des flüssigen Materials hervorgerufenen Druck, welcher insgesamt auf einer Blase lastet, übertrifft. Durch den hohen Dampfdruck entstehen Blasen und andere Hohlräume, welche eine poröse Struktur der amorphen Schicht hervorrufen. Geeignete Zusatzwerkstoffe sind beispielsweise Metalle in Form von Quecksilber, Cäsium, Kalium, Natrium oder Lithium, die einen deutlich niedrigeren Schmelzpunkt als das Ni-Basismaterial haben. Beim sehr schnellen Abkühlen wird dann nicht nur die Rekristallisation des Basismaterials und der zusätzlich zugeführten Werkstoffe oder der Legierungen, die sich aus Basismaterial und Zusatzwerkstoffen gebildet haben, verhindert, sondern auch der Zusammenbruch der blasigen Strukturbestandteile und das Wieder-Zusammenfließen des flüssigen Materials zu einem homogenen (amorphen) Festkörper. Die Entstehung der Poren wird begünstigt, wenn während des Aufschmelzens für eine starke Konvektion des flüssigen Materials gesorgt wird, durch entsprechende Verlängerung der Bestrahlungsdauer.

Hierdurch tritt eine verbesserte Vermischung des Basismaterials und der zugeführten Werkstoffe auf.

Geschlossene Poren entstehen, wenn die aufgeschmolzenen Werkstoffe sehr schnell abgekühlt werden. In diese ist der Transport von Gas in die Oberfläche nicht möglich, und es ist daher nicht möglich, daß sich in der Tiefe der Oberfläche Oxide oder Oxidschichten bilden, die beim Aufwachsen ab einer kritischen Dicke oder Volumenvergrößerung zum Abplatzen von Oberflächenbestandteilen führen könnten.

Weitere erfinderische Merkmale sind in den abhängigen Ansprüchen gekennzeichnet.

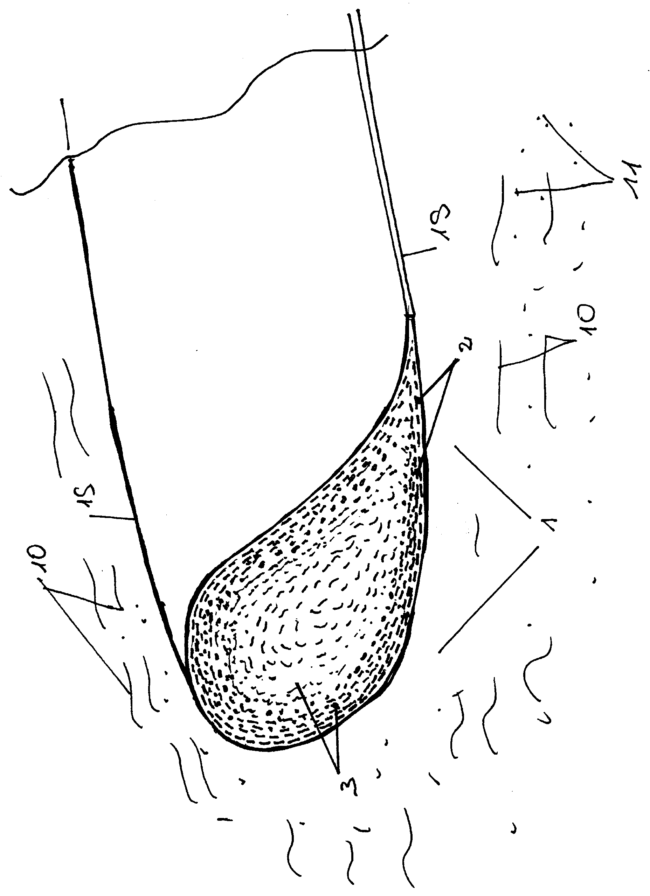

Die einzige zur Beschreibung gehörige Figur zeigt eine Turbinenschaufel 1, die Bestandteil einer Gasturbine (hier nicht dargestellt) ist. Sie ist den Verbrennungsgasen 10 dieser Gasturbine direkt ausgesetzt, und damit auch den festen Teichen 11, die in diesem Gas 10 mitgeführt werden. Die Turbinenschaufel 1 wird vor einer Beschädigung durch die Teilchen 11 geschützt, da diese mit einer sehr hohen Geschwindigkeit auf die Oberflächen 1S der Turbinenschaufel 1 auftreffen. Zu diesem Zweck sind die Oberflächen 1S der Turbinenschaufel 1 in besonderer Weise ausgebildet. Wie der Figur zu entnehmen ist, weisen alle Oberflächen 1S eine dem Verbrennungsgas 10 zugewandte amorphe Struktur 2 auf, die fließend in eine sich nach innen fortsetzende kristalline Struktur 3 übergeht. Zur Ausbildung der amorphen Struktur 2 werden die Oberflächen 1S mit dem Strahl eines CO₂-Lasers zunächst bis zu einer Tiefe von 0.001 bis 3 mm aufgeschmolzen und anschließend mit 10¹⁰ bis 10¹⁵ K/s wieder abgekühlt. Die Dicke der erzielten amorphen Struktur 2 entspricht näherungsweise der Tiefe des Aufschmelzens. Diese geht fließend in die darunter liegende, ursprüngliche, kristalline Struktur 3 des Basismaterials über. Durch die Zuführung von Werkstoffen in Form kann auch eine neue, tieferliegende, kristalline Schicht in Form einer Legierung, ausbilden, in welche die amorphe oberflächennahe Schicht fließend übergeht.

Erfindungsgemäß besteht die Möglichkeit, den Oberflächen während des Ausschmelzens Material hinzuzufügen, um beispielsweise auf der Turbinenschaufel 1 bis zu einer Tiefe von 0,001 mm bis 3 mm eine Legierung, ein Cermet oder eine Mischkeramik aus der geschmolzenen Nickelbasislegierung und dem zugefügten Werkstoff zu bilden. Dieser zusätzliche Werkstoff kann so gewählt werden, daß diese Legierungen, Cermets oder Mischkeramiken schlecht wärmeleitende Eigenschaften aufweisen.

Als zusätzliche Werkstoffe, welche ein möglichst großes Verhältnis von elastischer zu plastischer Verformung der amorphen Struktur und damit Beständigkeit gegen Teilchenschlagerosion fördern sollen, eignen sich beispielsweise solche mit einem hohen Verhältnis von Kationen- zu Anionengewicht wie Zirkoniumdioxid, Bariumoxid, Titanoxid oder Yttriumoxid. Erfindungsgemäß soll die Struktur 2 geschlossene Poren (hier nicht dargestellt) aufweisen. Bei geschlossenen Poren kann das Gas 10 nicht in die Oberflächen 1S eindringen. Diese Poren werden vorzugsweise dann gebildet, wenn während des Aufschmelzens der Oberflächen 1S Werkstoffe in Form von Quecksilber, Cäsium, Kalium und/oder Lithium hinzugefügt werden und anschließend die Oberflächen der Turbinenschaufel 1 sehr schnell abgekühlt wird. Die zusätzlichen Werkstoffe können in Form von Bändern, Drähten, Pulvern, Fasern oder aus der Gasphase während des Aufschmelzens der Oberflächen 1S zugefügt werden. Durch das schnelle Abkühlen entsteht somit eine amorphe Schicht mit einer materiellen Zusammensetzung, die von der des Ni-Basiswerkstoffs verschieden ist.

Diese kann entweder fließend in den Ni-Basiswerkstoff oder in eine kristalline Schicht übergehen, die sich ebenfalls durch Legierung etc. gebildet hat. Diese kristalline Schicht unterliegt jedoch wegen größerem Abstand von der Oberfläche nicht den vollen, hohen Abkühlungsraten der oberflächennahen Bereiche, sondern kühlt sich wegen der thermischen Ankopplung an die Wärmekapazität des Basismaterials der Schaufel und wegen der fehlenden Abstrahlungsverluste an die Umgebung der Schaufel langsamer ab und ermöglicht dadurch Kristallwachstum, bevor dieser Bereich ebenfalls erstarrt. Darunter liegt dann das ursprüngliche Ni-Basismaterial. Der Übergang hierzu ist wiederum graduell, von einer kristallinen Legierungsschicht in die kristalline Struktur des unlegierten Basismaterials.

Um bei sehr stark beanspruchten Turbinenschaufeln 1 den Schutz zu verbessern, kann es sinnvoll, nach dem Erstarren der mit dem Strahl eines CO₂-Lasers behandelten Oberfläche 1S diese nochmals aufzuschmelzen und wieder mit einer pro Zeiteinheit vorgegebenen Temperaturabsenkung abzukühlen.

## Patentansprüche

1. Verfahren zur Herstellung einer Turbinenschaufel aus einer Ni-Basislegierung für eine Gasturbine, dadurch gekennzeichnet, daß die Oberflächen (1S) der Turbinenschaufel (1) zur Ausbildung eines definierten amorphen Bereichs (2) auf der kristallinen Struktur des Basismaterials bis zu einer vorgegebenen Tiefe aufgeschmolzen und anschließend mit einer pro Zeiteinheit vorgegebenen Temperaturabsenkung abgekühlt werden.

2. Verfahren nach Anspruch 1, dadurch gekennzeichnet, daß zur Ausbildung einer dem Verbrennungsgas (10) zugewandten amorphen Struktur (2) auf der kristallinen Struktur (3) des Basismaterials die Oberflächen (1S) bis zu einer Tiefe von 0,001 bis 3 mm mit dem Strahl eines CO₂-Lasers aufgeschmolzen und anschließend mit 10¹⁰ bis 10¹⁵ K/s abgekühlt werden.

3. Verfahren nach Anspruch 1, dadurch gekennzeichnet, daß zur Ausbildung einer dem Verbrennungsgas (10) zugewandten amorphen Struktur (2) mit geschlossenen Poren auf der kristallinen Struktur (3) des Basismaterials die Oberflächen (1S) unter Zufuhr eines oder mehrerer zusätzlicher Werkstoffe bis zu einer definierten Tiefe aufgeschmolzen und anschließend mit einer pro Zeiteinheit vorgegebenen Temperaturabsenkung abgekühlt werden.

4. Verfahren nach einem der Ansprüche 1 oder 3, dadurch gekennzeichnet, daß zur Ausbildung einer dem Verbrennungsgas (10) zugewandten amorphen Struktur (2) auf der kristallinen Struktur (3) des Basismaterials die Oberflächen (1S) unter Zufuhr eines oder mehrerer zusätzlicher Werkstoffe bis zu einer Tiefe von 0,001 bis 3 mm mit dem Strahl eines CO₂-Lasers aufgeschmolzen und anschließend mit 10¹⁰ bis 10¹⁵ K/s abgekühlt werden.

5. Verfahren nach einem der Ansprüche 1 bis 3, dadurch gekennzeichnet, daß zur Ausbildung einer dem Verbrennungsgas (10) zugewandten amorphen Struktur (2) auf der kristallinen Struktur (3) des Basismaterials die Oberflächen (1S) unter Zufuhr von einem oder mehreren Werkstoffen mit einem hohen Verhältnis von Kationen zu Anionengewicht bis zu einer Tiefe von 0,001 bis 3 mm mit dem Strahl eines CO₂-Lasers aufgeschmolzen und anschließend mit 10¹⁰ bis 10¹⁵ K/s abgekühlt werden.

6. Verfahren nach Anspruch 5, dadurch gekennzeichnet, daß zur Ausbildung einer dem Verbrennungsgas (10) zugewandten amorphen Struktur (2) auf der kristallinen Struktur (3) des Basismaterials die Oberflächen (1S) unter Zufuhr von einem oder mehreren Werkstoffen in Form von Zirkoniumdioxid, Bariumoxid, Titanoxid oder Yttriumoxid bis zu einer Tiefe von 0,001 bis 3 mm mit dem Strahl eines CO₂-Lasers aufgeschmolzen und anschließend mit 10¹⁰ bis 10¹⁵ K/s abgekühlt werden.

7. Verfahren nach einem der Ansprüche 1 bis 4, dadurch gekennzeichnet, daß zur Ausbildung einer dem Verbrennungsgas (10) zugewandten amorphen Struktur (2) auf der kristallinen Struktur (3) des Basismaterials die Oberflächen (1S) unter Zufuhr von Werkstoffen, die beim Aufschmelzen einen hohen Dampfdruck aufweisen, bis zu einer Tiefe von 0,001 bis 3 mm mit dem Strahl eines CO₂-Lasers aufgeschmolzen und die Bestandteile durch Konvektion des flüssigen Basismaterials und der flüssigen Werkstoffe vermischt und anschließend mit 10¹⁰ bis 10¹⁵ K/s abgekühlt werden.

8. Verfahren nach Anspruch 6, dadurch gekennzeichnet, daß zur Ausbildung einer dem Verbrennungsgas (10) zugewandten amorphen Struktur (2) auf der kristallinen Struktur (3) des Basismaterials die Oberflächen (1S) unter Zufuhr von Quecksilber, Cäsium, Kalium und/oder Lithium bis zu einer Tiefe von 0,001 bis 3 mm mit dem Strahl eines CO₂-Lasers aufgeschmolzen und die Bestandteile durch Konvektion des flüssigen Basismaterials und der flüssigen Werkstoffe vermischt und anschließend mit 10¹⁰ bis 10¹⁵ K/s abgekühlt werden.

9. Turbinenschaufel aus einer Ni-Basisiegierung für eine Gasturbine, dadurch gekennzeichnet, daß die Oberflächen (1S) der Turbinenschaufel (1) mit einer dem Verbrennungsgas (10) zugewandten amorphen Struktur (2) und einer an den Innenbereich der Turbinenschaufel (1) angrenzenden kristallinen Struktur (3) versehen sind, und daß die Dicke der amorphen Struktur (2) 0,001 bis 3 mm beträgt.
